(19) Europäisches Patentamt
European Patent Office
Office européen des brevets

(11) Publication number: **0 265 412 B1**

# (12) EUROPEAN PATENT SPECIFICATION

(45) Date of publication of patent specification: **11.03.92**

(51) Int. Cl.[5]: **C07F 9/30**, C07F 9/547

(21) Application number: **87870147.3**

(22) Date of filing: **21.10.87**

## (54) 2-Amino-4-Phosphonyl-butanoate derivates and preparation of 2-amino-4-phosphinyl butanoic acids.

(30) Priority: **24.10.86 US 922928**

(43) Date of publication of application:
**27.04.88 Bulletin 88/17**

(45) Publication of the grant of the patent:
**11.03.92 Bulletin 92/11**

(84) Designated Contracting States:
**AT BE CH DE ES FR GB GR IT LI LU NL SE**

(56) References cited:
**EP-A- 0 018 415**
**US-A- 3 222 378**
**US-A- 4 510 102**

**TETRAHEDRON LETTERS, vol. 27, no. 49, 1986, pages 5935-5938, Pergamon Journals, Ltd, London, GB; E.W. LOGUSCH: "Facile synthesis of D,L-phosphinothricin from methyl 4-bromo-2-phthalimidobutyrate"**

(73) Proprietor: **Monsanto Company**
**Patent Department 800 North Lindbergh Boulevard**
**St. Louis Missouri 63167-7020(US)**

(72) Inventor: **Logusch, Eugene Walter**
**5063 Towne Centre Drive**
**St. Louis Missouri 63128(US)**

(74) Representative: **Bosch, Henry et al**
**Monsanto Services International S.A. Patent Department, Avenue de Tervuren 270/272, Letter Box No. 21**
**B-1150 Brussels(BE)**

EP 0 265 412 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to new 2-amino-4-phosphonyl butanoate derivatives and their use in a process for preparing the well known herbicide 2-amino-4-(hydroxymethylphosphinyl)butanoic acid, as well as other biologically active compounds.

The compound L-2-amino-4-(hydroxymethylphosphinyl)butanoic acid, also known in the art as phosphinothricin or glufosinate, is an effective broad spectrum phytotoxicant useful in controlling the growth of emerging seedlings and maturing and established woody and herbaceous vegetation. The compound can be represented by the formula:

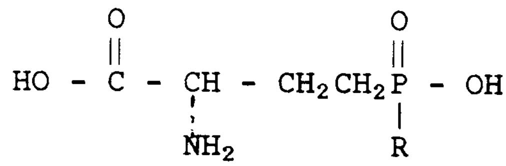

Phosphinothricin, where R is methyl, is a naturally occurring phosphinic acid analog of L-glutamate. Its activity has been attributed to an ability to inactivate the enzyme glutamine synthetase, thus blocking in vivo ammonia incorporation into amino acids and pyrimidines. Phosphinothricin was first isolated from two different streptomycete species, although the racemic P-ethyl analog was prepared considerably earlier and was shown to inhibit glutamine synthetase.

Rupp et al, U.S. Patent 4,168,963, refer to earlier described methods for the preparation of phosphinothricin, which include base-catalyzed reactions of dialkyl acetamidomalonate esters with alkyl 2-halo-ethylmethylphosphinate esters or alkyl methylvinylphosphinate esters, as well as Strecker synthesis on 3-(alkoxymethylphosphinyl)propanoic aldehydes.

Minowa et al, U.S. Patent 4,510,102, refer to other earlier described methods for the preparation of phosphinothricin, including the Michaelis-Arbuzov reaction of diethyl methylphosphonite with methyl 4-bromo-2-trifluoroacetamidobutanoate, a method characterized by low yields and instability of the brominated intermediate. Minowa et al further disclose a new preparation of phosphinothricin which involves the coupling of vinyl magnesium halides with alkyl methylphosphinyl halides, followed by base-catalyzed addition to the resulting alkyl methylvinylphosphinates of certain Schiff bases of alkyl glycinates, and subsequent hydrolysis.

Minowa et al, U.S. Patent 4,499,027, disclose a new preparation of optically pure isomers of phosphinothricin which involves the base-catalyzed addition to alkyl methylvinylphosphinates of certain Schiff bases prepared from alkyl glycinates and optically active 2-hydroxypinan-3-ones.

European patent application No. EP-A-0 018 415 discloses 4-methylphosphino-butyric acid dialkyl esters substituted in position 2 by a phthalimido group, more particularly 4-(0-isobutyl-methyl) phosphino-2-N-phthalimido butyric acid ethyl ester (see Claim 1 and Example 6). The disclosed compounds are prepared by reacting a corresponding vinylacetic acid with methylphosphorus acid monoalkylester at 100-200 ° C in the presence of a radical-generating agent or under irradiation with ultraviolet rays.

Although these and other methods are available for the preparation of phosphinothricin, they are characterized by the use of strong bases and/or harsh conditions which are necessary to achieve the final end product. Thus, there still remains a need for processes to prepare phosphinothricin, its P-ethyl analog, and other phosphinylbutanoic acids, which produce the desired products in high yields and without the use of strong base or harsh conditions.

### SUMMARY OF THE INVENTION

There is provided a novel compound represented by the formula:

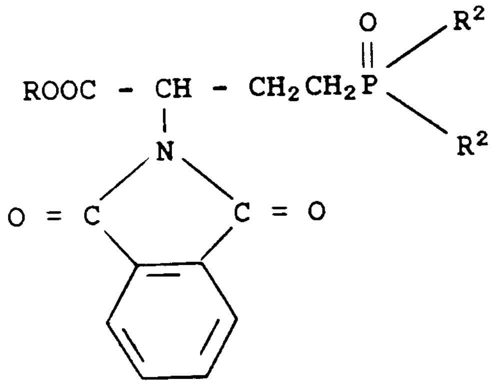

wherein R is selected from alkyl having one to six carbon atoms and aryl, and $R_2$ is selected from alkoxy having from one to six carbon atoms, aryloxy, and trialkylsilyloxy groups having from one to twelve carbon atoms.

This compound may be prepared by bringing together under reaction conditions a racemic 4-halo-2-phthalimidobutyrate represented by the formula:

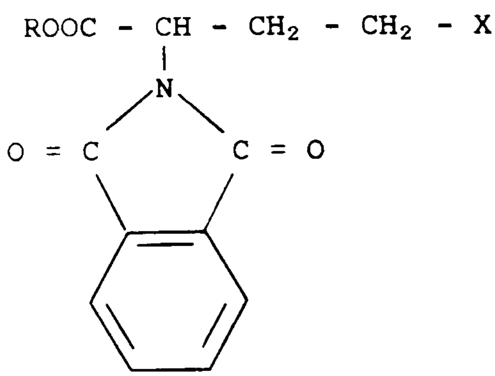

wherein R is as described above, X is selected from chlorine, bromine and iodine and a phosphorous compound represented by the formula

$P - (R^2)_3$

wherein $R^2$ is as defined above.

When hydrolizing the compound of the invention, phosphinylbutanoic acids are obtained.

## DETAILED DESCRIPTION OF THE INVENTION

The 4-halo-2-phthalimidobutyrate, useful as a starting material in the process is known to the art. The compound can be prepared in two steps from crystalline 2-phthalimidobutyrolactone, which can be prepared by the reaction of potassium phthalimide with 2-bromobutyrolactone in a suitable solvent, such as dimethylformamide, at about 100 ° C. The 2-phthalimidobutyrolactone may contain some phthalimide, but it is useful in the next step; however, if desired, it can be purified in about a 75% yield by two recrystallizations from a water/acetone mixture.

The lactone can be dissolved in glacial acetic acid and anhydrous hydrohalide acid and allowed to stand for 24 hours to obtain the 4-halo-2-phthalimidobutanoic acid. The acid can be esterified by non-basic esterification procedures. The use of basic reaction conditions is to be avoided since the lactones have been found to re-form under such conditions. Suitable procedures include: esterification with diazoalkanes; treatment with an alcohol in the presence of a dialkylcarbodiimide; esterification with an alcohol solution containing an alkylsulfonic or mineral acid catalyst; and treatment with trialkyl orthoesters containing an acid catalyst.

As will occur to those skilled in the art, the ester moiety on the 4-halo-2-phthalimidobutyrate can vary within wide limits. The ester moiety can be selected from alkyl having from 1 to about 6 carbon atoms, for

example, methyl, ethyl, isopropyl, or even a cyclic alkyl group, for example, cyclohexyl. The ester grouping also can be an alkyl group substituted with a benzyl or other inert group. The group can also be an aryl, for example, a phenyl group or a substituted phenyl group. Alkyl groups are preferred, and lower alkyl groups such as methyl or ethyl are especially preferred.

According to the invention, the 4-halo-2-phthalimidobutyrate is brought together with a tricoordinate phosphorus compound represented by the formula

$P\text{-}(R^2)_3$

where $R^2$ selected from alkoxy having from one to six carbon atoms, aryloxy, and trialkylsilyloxy groups having from one to twelve carbon atoms to form a novel intermediate compound represented by the formula

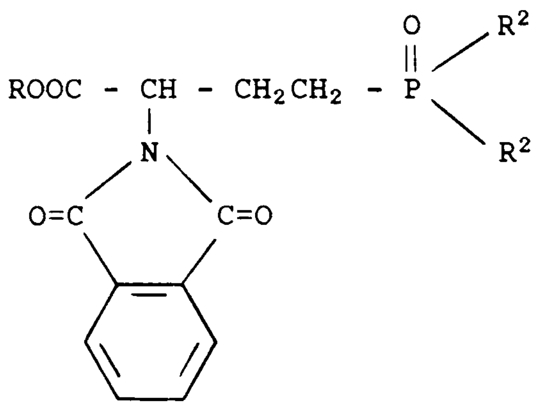

where R and $R^2$ are as defined above. Preferably $R^2$ is alkoxy, and methoxy and ethoxy are especially preferred.

In the process of the present invention, the compound described above is then hydrolyzed to the desired phosphinothricin, its P-ethyl analog, or other phosphinylbutanoic acids, depending on the values of R. Hydrolysis can mean any procedure known to those skilled in the art which is designed to cleave hydrolytically, either simultaneously or in a stepwise fashion, all of the ester and amide groups found in the compound to provide the desired end product. Suitable hydrolysis procedures include, but are not limited to: heating with a concentrated aqueous solution of a strong mineral acid, such as hydrochloric acid, sulfuric acid, and the like; saponification with an aqueous alkali metal hydroxide solution, such as sodium hydroxide, potassium hydroxide, and the like, followed by acid hydrolysis; hydrazinolysis, or similar amine mediated cleavage of a phthaloyl group, followed by acid hydrolysis; cleavage of the phthaloyl group with an alkali borohydride salt in an alcoholic medium, followed by acid hydrolysis; cleavage of phosphinate esters with trialkylsilyl halides, followed by carboxylate ester and phthaloyl group hydrolysis. However, because of the simplicity of the procedure and the elimination of unwanted byproducts, heating with a concentrated aqueous solution of a strong mineral acid, such as hydrochloric acid or sulfuric acid, is preferred, and the use of hydrochloric acid is especially preferred. The temperature of the acid hydrolysis can be determined by routine experimentation by those skilled in the art, but it is preferred to use temperatures above about 75°C.

This novel compound is useful in the preparation of racemic 2-amino-4-phosphonobutyric acid (DL-APBA), a known antagonist of glutamatergic neurotransmission, and other useful amino acids.

The invention is further illustrated by, but not limited to, the following examples. In all of the examples, 1H NMR spectra were recorded on a continuous-wave spectrometer at 60 MHz; shifts are reported as ppm downfield from tetramethylsilane. 31P NMR spectra were recorded at 40 MHz on a fourier-transform spectrometer using proton irradiation and external deuterium lock; shifts are reported as ppm downfield from 85% $H_3PO_4$.

Example 1

DL-4-BROMO-2-(1,3-DIHYDRO-1,3-DIOXO-2H-ISOINDOL-2-YL)BUTANOIC ACID

A lactone was prepared by the reaction of a slight excess of 2-bromo-4-butyrolactone with potassium phthalimide in dimethylformamide at 100°C. The lactone (115.5 g, 0.5 mole) was suspended in 1500 ml

glacial acetic acid, and a steady stream of anhydrous hydrobromic acid was passed through the mechanically stirred mixture until the starting material dissolved (about 1 hour), and for 1 hour thereafter. After standing for 12 hours, the solution was evaporated, in vacuo, and the residue was dissolved in diethyl ether, which was boiled with neutral charcoal, filtered, and diluted with hexane. The product (148 g, 95%) was obtained after crystallization as large prisms, m.p. 121-123 °C.
1H NMR (CDC13): 2.75 (2H,q,J = 3.5), 3.45 (2H,m), 5.20 (1H,t,J = 4), 7.80 (4H,m).

| Analysis ($C_{12}H_{10}BrNO_4$): | | | |
|---|---|---|---|
| Calculated,<br>Found, | C 46.18,<br>C 46.24, | H 3.23,<br>H 3.26, | N 4.49;<br>N 4.49. |

Example 2

METHYL DL-4-BROMO-2-(1,3-DIHYDRO-1,3-DIOXO-2H-ISOINDOL-2-YL)BUTANOATE

An ethereal solution of the product from Example 1 (30 g, 96 mmol) was cooled to 0 °C and treated with excess ethereal diazomethane until a yellow color persisted which was discharged upon dropwise addition of glacial acetic acid. Dilution with hexane and crystallization afforded the product (29.7 g, 95%) as large prisms, m.p. 41-43 °C. 1H NMR (CDC13): 2.77 (2H, q, J = 3.5), 3.37 (2H,m), 3.70 (3H,s), 5.12 (1H, t, J = 3.5), 7.78 (4H, m).

| Analysis ($C_{13}H_{12}BrNO_4$): | | | |
|---|---|---|---|
| Calculated:<br>Found, | C, 47.87;<br>C, 47.98; | H, 3.71;<br>H, 3.72; | N, 4.29;<br>N, 4.28. |

Example 3

METHYL DL-4-BROMO-2-(1,3-DIHYDRO-1,3-DIOXO-2H-ISOINDOL-2-YL)BUTANOATE

A solution of the product from Example 1, X = Br, (200 g, 0.64 mole) in 1.0 liter of 3/2 2,2-dimethoxypropane/methanol containing 50 ml of concentrated hydrochloric acid was allowed to stand for 64 hours, whereupon solvents were evaporated in vacuo. The residue was partitioned between ether and saturated aqueous sodium bicarbonate, and the organic phase was washed with brine, dried with magnesium sulfate, filtered and evaporated in vacuo to give the crude product (229 g) as a yellow oil. This material was treated with silica gel in ether to remove polar impurities, and the ethereal filtrate was boiled with neutral charcoal, filtered and diluted with hexane. The pure product (153 g, 73%) was obtained after crystallization as described in Example 2. Additional material of sufficient purity for further reactions could be obtained by further crystallizations from the initial mother liquor.

Example 4

METHYL DL-2-(1,3-DIHYDRO-1,3-DIOXO-2H-ISOINDOL-2-YL)-4-IODOBUTANOATE

A solution of the product of Example 3 (6.52 g, 20 mmol) and sodium iodide (7.49 g, 50 mmol) in 250 ml of dry acetone was heated at reflux for 12 hours. After evaporation of solvent in vacuo, the residue was partitioned between ether and saturated aqueous sodium bisulfite. The organic phase was washed with brine, dried with magnesium sulfate, filtered and partially evaporated in vacuo. Dilution with hexane and crystallization afforded the product (7.24 g, 97%) as large prisms, m.p. 57-59 °C. 1H NMR (CDC13): 2.85 (2H,m), 3.25 (2H,m), 3.74 (3H,m), 5.08 (1H,t,J = 3.5), 7.82 (4H,m).

| Analysis ($C_{13}H_{12}INO_4$): | | | |
|---|---|---|---|
| Calculated,<br>Found, | C, 41.85;<br>C, 41.91; | H, 3.24;<br>H, 3.36; | N, 3.75;<br>N, 3.81. |

Example 5

METHYL DL-4-(DIETHOXYPHOSPHINYL)-2-(1,3-DIHYDRO-1,3-DIOXO-2H-ISOINDOL-2-YL)BUTANOATE

A solution of the product of Example 3 (5.0 g, 15.3 mmol) in 50 ml of triethyl phosphite protected from moisture was heated at 125 ° C for 16 hours. Solvent and volatile phosphonates were removed by heating at 80 ° C and 1 Torr, and chromatography of the residue on silica gel using ethyl acetate afforded the purified phosphonate (5.50 g, 94%) as a colorless oil. 1H NMR (CDC13): 1.30 (6H,t,J = 3), 1.35-2.87 (4H,m), 3.72 (3H,s), 4.08 (4H,quin,J = 3), 4.87 (1H,t,J = 3), 7.80 (4H,m). 31P NMR (CDC13): 30.08.

| Analysis ($C_{17}H_{22}NO_7P$ + $O.6H_2O$): | | | |
|---|---|---|---|
| Calculated,<br>Found | C, 51.80;<br>C, 51.78; | H, 5.93;<br>H, 5.67; | N, 3.55;<br>N, 3.56. |

Example 6

METHYL DL-2-(1,3-DIHYDRO-1,3-DIOXO-2H-ISOINDOL-2-YL)-4-(DIMETHOXYPHOSPHINYL)BUTANOATE

Reaction of the product from Example 3 with trimethyl phosphite in the manner described for Example 7 afforded the phosphonate as small prisms, recrystallized from ether-ethyl acetate, m.p. 93-95 ° C. 1H NMR (CDC13): 1.45-2.85 (4H,m), 3.64 (6H,d,J = 5), 3.66 (3H,s), 4.82 (1H,t,J = 3), 7.69 (4H,m). 31P NMR (CDC13): 32.68.

| Analysis ($C_{15}H_{18}NO_7P$): | | | |
|---|---|---|---|
| Calculated,<br>Found | C, 50.71;<br>C, 50.71; | H, 5.11;<br>H, 5.14; | N, 3.94;<br>N, 3.88 |

Example 7

DL-2-AMINO-4-(DIHYDROXYPHOSPHINYL)BUTANOIC ACID (DL-2-AMINO-4-PHOSPHONOBUTYRIC ACID, DL-APBA)

A solution of the phosphonate product from Example 5 (1.75 g, 4.6 mmol) in 50 ml of concentrated hydrochloric acid containing 5 ml of glacial acetic acid was heated at reflux for 24 hours. Evaporation of solvents in vacuo, followed by trituration with cold water and removal of precipitated phthalic acid, afforded the crude hydrochloride salt as a foam after evaporation of water. This material was dissolved in 15 ml of methanol at 0 ° C, propylene oxide (0.44 g, 7.7 mmol) was added, and the solution was allowed to stand 12 hours at 0 ° C. Filtration of the precipitated product, followed by azeotroping with water and crystallization, afforded pure DL-APBA (0.70 g, 84%) as colorless prisms, m.p. 210-213 ° C. 1H NMR (D20): 2.05 (4H,m), 4.09 (1H,m). 31P NMR (D20): 24.47.

| Analysis ($C_4H_{10}NO_5P$ + $1.OH_2O$): | | | |
|---|---|---|---|
| Calculated,<br>Found, | C, 23.89;<br>C, 23.85; | H, 6.01;<br>H, 6.02; | N, 6.96;<br>N, 6.94. |

Example 8

METHYL 1-(1,3-DIHYDRO-1,3-DIOXO-2H-ISOINDOL-2-YL)CYCLOPROPANOATE

A solution of the product from Example 3 (R = $CH_3$, X = Br, 15.0 g, 46.0 mmol) in 30 ml of dry tetrahydrofuran was added dropwise to a suspension of hexane-washed sodium hydride (50% oil dispersion, 2.65 g, 55.2 mmol) in 60 ml of dry tetrahydrofuran. The resulting mixture was stirred for 12 hours and partitioned between ether and brine, and the organic phase was washed with brine, dried with magnesium sulfate, filtered and evaporated in vacuo to give the crude product (10.5 g) as a white solid. Recrystallization from ether-hexane afforded the purified ester (10.2 g, 86%) as small prisms, m.p. 139-141 °C. 1H NMR (CDC13): 1.60 (4H, two dd, J = 9/3,15/5), 3.60 (3H,s), 7.65 4H,m).

| Analysis ($C_{13}H_{11}NO_4$): | | | |
|---|---|---|---|
| Calculated, | C, 63.67; | H, 4.52; | N, 5.71; |
| Found | C, 63.68; | H, 4.56; | N, 5.67. |

Example 9

1-AMINOCYCLOPROPANECARBOXYLIC ACID (ACC)

A solution of the ester from Example 8 (10.0 g, 40.8 mmol) in 200 ml of 6N HCl was heated at reflux for 12 hours. Evaporation of solvent in vacuo, followed by trituration with cold water and removal of precipitated phthalic acid, gave the crude product as a white solid. Recrystallization from water-acetone afforded ACC hydrochloride (5.30 g, 95%) as small needles, m.p. 220-222 °C. 1H NMR (D20): 1.40 (m).

| Analysis ($C_4H_8ClNO_2$): | | | | |
|---|---|---|---|---|
| Calculated, | C, 34.47; | H, 5.93; | N, 10.05; | Cl, 25.44; |
| Found | C, 34.39; | H, 5.93; | N, 10.10; | Cl, 25.27. |

A solution of ACC hydrochloride (2.75 g, 20 mmol) in 100 ml of water containing 30 g of slightly basic Dowex WGR-2 resin was stirred for 3 hours. Filtration and evaporation of solvent in vacuo furnished crude ACC as a white solid. Recrystallization from water-ethanol furnished purified ACC as small plates, m.p. 231-233 °C. 1H NMR (D20): 1.25 (m).

| Analysis ($C_4H_7NO_2$): | | | |
|---|---|---|---|
| Calculated, | C, 45.11; | H, 7.19; | N, 13.15; |
| Found, | C, 44.80; | H, 7.13; | N, 13.03. |

## Claims

**1.** A compound represented by the formula

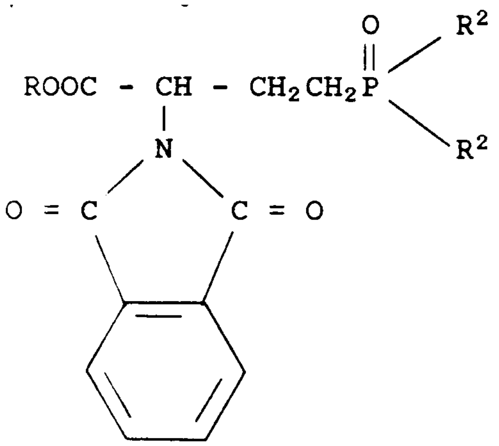

wherein R is selected from the group consisting of alkyl having one to six carbon atoms and aryl, and $R^2$ is selected from alkoxy having from one to six carbon atoms, aryloxy, and trialkylsilyloxy groups having from one to twelve carbon atoms.

2. A compound of Claim 1 wherein $R^2$ is alkoxy.

3. A compound of Claim 2 wherein $R^2$ is methoxy or ethoxy.

4. Process for the preparation of a compound according to Claims 1-3 characterized by the steps of bringing together under reaction conditions a racemic 4-halo-2-phthalimidobutyrate represented by the formula:

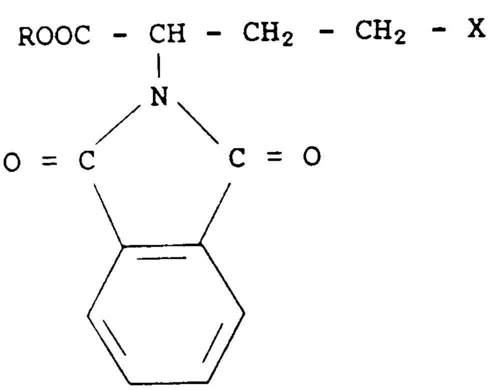

wherein R is selected from alkyl having one to about 6 carbon atoms and aryl, and X is selected from chlorine, bromine and iodine;
and a tricoordinate phosphorus compound represented by the formula

$P - (R^2)_3$

wherein each $R^2$ is selected from alkoxy, having from one to six carbon atoms, aryloxy, and trialkylsilyloxy groups having from one to twelve carbon atoms.

5. A process according to Claim 4 wherein R is alkyl.

6. A process for the preparation of 2-amino-4-phosphinylbutanoic acids by hydrolyzing a compound according to Claims 1 to 3.

**Revendications**

1. Composé représenté par la formule :

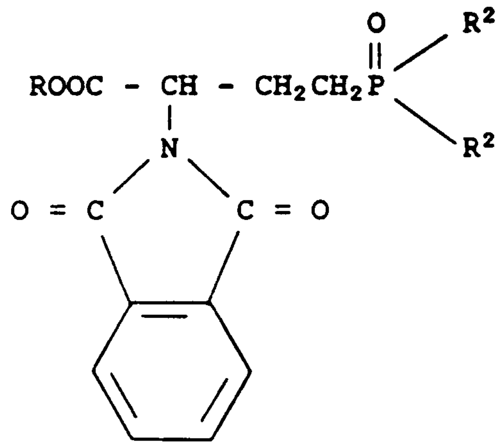

dans laquelle R est choisi parmi un groupe alkyle en $C_1$ à $C_6$ et un groupe aryle, et $R^2$ est choisi parmi un groupe alcoxy en $C_1$ à $C_6$, un groupe aryloxy et un groupe trialkylsilyloxy ayant de un à douze atomes de carbone.

**2.** Composé selon la revendication 1, dans lequel $R^2$ est un groupe alcoxy.

**3.** Composé selon la revendication 2, dans lequel $R^2$ est un groupe méthoxy ou éthoxy.

**4.** Procédé pour la préparation d'un composé selon les revendications 1 à 3, caractérisé en ce qu'on amène dans des conditions de réaction un 4-halo-2-phtalimidobutyrate racémique représenté par la formule :

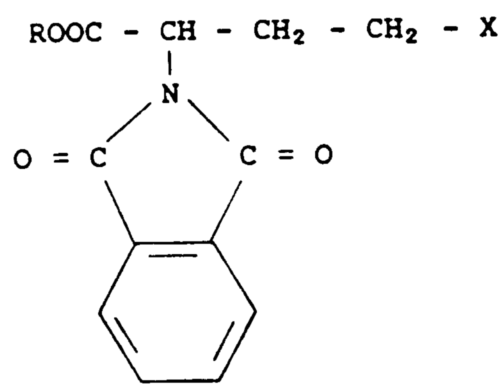

dans laquelle R est choisi parmi un groupe alkyle ayant un à environ six atomes de carbone et un groupe aryle, et X est choisi parmi un atome de chlore, de brome et d'iode;
et un composé tricoordonné du phosphore représenté par la formule :

$P - (R^2)_3$

dans laquelle chacun des $R^2$ est choisi parmi les groupes alcoxy en $C_1$ à $C_6$, aryloxy et trialkylsilyloxy en $C_1$ à $C_{12}$.

**5.** Procédé selon la revendication 4, dans lequel R est un groupe alkyle.

**6.** Procédé pour la préparation d'acides 2-amino-4-phosphinylbutanoïques par hydrolyse d'un composé selon les revendications 1 à 3.

**Patentansprüche**

**1.** Verbindung der Formel

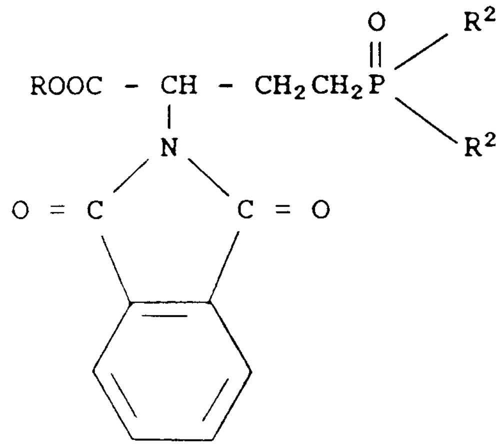

worin R aus der Gruppe bestehend aus Alkyl mit 1 bis 6 Kohlenstoffatomen und Aryl ausgewählt ist, und $R^2$ aus Alkoxy mit 1 bis 6 Kohlenstoffatomen, Aryloxy, und Trialkylsilyloxygruppen mit 1 bis 12 Kohlenstoffatomen ausgewählt ist.

**2.** Verbindung nach Anspruch 1, worin $R^2$ Alkoxy bedeutet.

**3.** Verbindung nach Anspruch 2, worin $R^2$ Methoxy oder Ethoxy darstellt.

**4.** Verfahren zur Herstellung einer Verbindung nach einem der Ansprüche 1 bis 3, gekennzeichnet durch die Schritte des Vereinigens unter Reaktionsbedingungen eines racemischen 4-Halogen-2-phthalimido-butyrats der Formel:

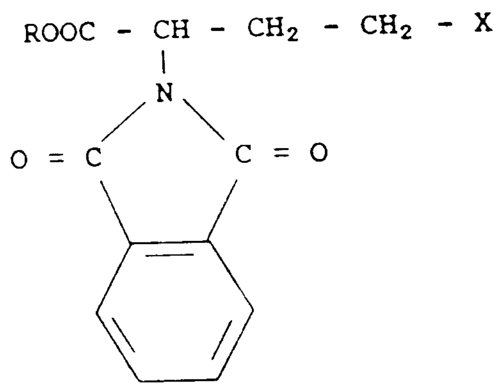

worin R aus Alkyl mit 1 bis etwa 6 Kohlenstoffatomen und Aryl ausgewählt ist und X aus Chlor, Brom und Jod ausgewählt ist; und
einer trikoordinativen Phosphorverbindung der Formel

$P - (R^2)_3$,

worin jedes $R^2$ aus Alkoxy mit 1 bis 6 Kohlenstoffatomen, Aryloxy, und Trialkylsilyloxygruppen mit 1 bis 12 Kohlenstoffatomen ausgewählt ist.

**5.** Verfahren nach Anspruch 4, worin R Alkyl bedeutet.

**6.** Verfahren zur Herstellung von 2-Amino-4-phosphinylbutansäuren durch Hydrolysieren einer Verbindung nach einem der Ansprüche 1 bis 3.